# FASCICULE DE BREVET EUROPEEN

(11) **EP 3 019 403 B1**
(45) Date de publication et mention de la délivrance du brevet: **13.09.2017**
(21) Numéro de dépôt: 14737198.3
(22) Date de dépôt: 04.07.2014
(51) Int. Cl.: B64G 1/40, F02K 9/97, B64G 5/00, B64G 1/14, B64F 5/00, B64G 1/64, F02K 9/34

(54) **BLOC PROPULSEUR POUR VÉHICULE DE LANCEMENT RÉUTILISABLE**
ANTRIEBSEINHEIT FÜR EINE WIEDERVERWENDBARE TRÄGERRAKETE
PROPULSION UNIT FOR REUSABLE LAUNCH VEHICLE

(30) Priorité: 08.07.2013 FR 1356695
(43) Date de publication de la demande: 18.05.2016
(73) Titulaire: Airbus Safran Launchers SAS, 75015 Paris (FR)
(72) Inventeur: CORABOEUF, Yohann, F-33160 SAINT MEDARD EN JALLES (FR); DUTHEIL, Jean-Philippe, F-33127 Martignas-sur-Jalles (FR)
(74) Mandataire: Deschamps, Samuel
(86) Numéro de dépôt international: PCT/EP2014/064282
(87) Numéro de publication internationale: WO 2015/004010

(56) Documents cités:
- EP-A1- 0 038 227
- EP-A1- 0 893 344
- WO-A1-86/01484
- WO-A1-96/07587
- FR-A1- 2 940 248
- US-A- 3 194 525
- US-A- 3 929 306
- US-A- 6 158 693

## Description

### Domaine de l'invention

La présente invention concerne un bloc propulseur pour véhicule de lancement réutilisable et un véhicule de lancement équipé d'un tel bloc propulseur.

Elle vise encore un ensemble de manutention permettant d'échanger rapidement et en toute sécurité un tel bloc propulseur au sol.

### Arrière-plan technologique

Il existe un besoin croissant dans le domaine spatial pour des véhicules de lancement ou de transport de charges utiles qui soient réutilisables.

Ce besoin résulte notamment de la nécessité d'une réduction des coûts de développement et de mise en orbite des satellites, en particulier des petits satellites, ces coûts étant d'une telle importance qu'ils contribuent à limiter l'utilisation actuelle de l'espace.

Les petits satellites ne peuvent, à ce titre, être lancés qu'en complément d'un gros satellite ou avec d'autres petits satellites assemblés à un même lanceur.

Il conviendrait donc de disposer d'un véhicule de lancement spatial dont le coût d'exploitation autoriserait un lancement dédié à un petit satellite.

De plus, il répond également à une demande commerciale émergente de transport de charges utiles et/ou de passagers dans l'espace que ce soit pour des missions scientifiques, telles qu'à destination de la station spatiale internationale ISS, ou encore pour du tourisme spatial.

On connaît des véhicules réutilisables tels que des avions spatiaux, c'est-à-dire des véhicules capables de décoller du sol, d'atteindre l'espace et de revenir se Doser sur Terre.

Alors que les phases de décollage et d'atterrissage sont réalisées grâce aux turboréacteurs de l'avion, la phase de propulsion en vue de placer les passagers en apesanteur est typiquement réalisée au moyen d'un moteur-fusée.

En vue d'une exploitation commerciale optimisée, ces avions spatiaux doivent pourvoir assurer des sorties régulières, au rythme par exemple d'une sortie par semaine.

Si les matériaux structuraux de ces avions spatiaux autorisent un tel rythme de sorties, leurs moteurs-fusées bien que réutilisables, doivent être démontés après chaque sortie en vue de leur maintenance et de leur réapprovisionnement en chargement propulsif.

Or, l'agencement actuel des moteurs-fusées dans ces avions spatiaux rend leur démontage, ou montage, particulièrement long et laborieux.

Notamment, ces moteurs-fusées sont reliés par des liaisons fluides et électriques qui sont difficilement accessibles aux opérateurs pour leur connexion/déconnexion préalable au montage/démontage des moteurs-fusées.

On connaît dans l'état de la technique le brevet américain N° US 6 158 693, qui décrit un bloc propulseur pour véhicule de lancement réutilisable comprenant un moteur-fusée selon le préambule de la revendication 1. Toutefois, l'agencement du moteur-fusée décrit dans ce document de l'état de la technique rend le démontage, ou le montage, non aisé.

Il existe donc un besoin important pour réaliser un aménagement optimisé des interfaces d'un moteur-fusée réutilisable sur un avion spatial.

La présente invention vise à pallier les inconvénients ci-dessus exposés en proposant un bloc propulseur pour véhicule spatial particulièrement simple dans sa conception et dans son mode opératoire, dont l'aménagement dans la structure du véhicule spatial autorise des opérations facilitées de montage/démontage en vue de sa maintenance.

### BREVE DESCRIPTION DE L'INVENTION

A cet effet, l'invention concerne un bloc propulseur pour véhicule de lancement réutilisable comprenant un moteur-fusée supporté par un berceau.

Selon l'invention,
- ledit berceau comporte au moins trois éléments de fixation pour l'assemblage dudit bloc sur la structure dudit véhicule auquel ledit bloc est destiné à être rattaché,
- lesdits au moins trois éléments de fixation définissant un plan de démontage dudit bloc, et
- ledit bloc comprenant une ou plusieurs liaisons en fluide et/ou électriques dudit moteur, chacune de ces liaisons comportant une extrémité libre destinée à être assemblée à un circuit d'alimentation correspondant du véhicule auquel ledit bloc est destiné à être rattaché, le bout d'au moins certaines desdites extrémités libres est contenu dans ledit plan de démontage.

Le berceau destiné à la fixation et au support du moteur-fusée est avantageusement conçu comme une pièce compacte plane ou sensiblement plane. Ainsi, l'intervention de l'opérateur de maintenance est facilitée lors des opérations de montage/démontage du moteur car l'opérateur a alors accès à toutes les attaches et connexions du bloc propulseur qui sont placées dans un même plan.

De manière avantageuse, la ou les trappes de visite sur la structure de l'avion se trouvent également dans un même plan. En effet, toutes les attaches et les connexions du bloc propulseur se trouvant dans un même plan, une seule trappe de visite peut suffire. Alternativement, deux trappes peuvent être prévues en positions symétriques et proches l'une de l'autre afin de faciliter les opérations de maintenance.

A titre purement illustratif, ledit véhicule présentant un axe longitunal, ledit plan de démontage est un plan transversal audit axe.

Ledit moteur est monté au centre ou dans une zone centrale du berceau. La liaison moteur-berceau est de préférence réalisée par une liaison de type cardan pour autoriser l'orientation du moteur lors de son fonctionnement.

Dans différents modes de réalisation particuliers de ce bloc propulseur, chacun ayant ses avantages particuliers et susceptibles de nombreuses combinaisons techniques possibles:
- le bout de l'extrémité libre de chacune desdites liaisons est contenu dans ledit plan de démontage.
- ledit bloc propulseur comprend au moins un élément d'ancrage pour bloquer en rotation le moteur par rapport audit berceau, ledit au moins un élément d'ancrage étant relié d'une part audit moteur et d'autre part à un point d'accrochage correspondant sur ledit berceau,
- ledit berceau est allongé en présentant dans sa dimension transversale une face avant et une face arrière, ladite face avant étant destinée à être assemblée audit moteur, ladite face avant définissant un plan avant dudit berceau contenant au moins une partie de ladite face avant, ladite au moins une partie présentant des dimensions permettant la fixation des éléments d'ancrage dudit moteur.

A titre purement illustratif, le berceau présente une forme choisie dans le groupe comprenant une forme de disque, une forme de croix ou encore en X, une forme en A, une forme en H, une forme en Y, une forme en T, ...

Avantageusement, ladite face arrière définissant un plan arrière dudit berceau, lesdits plans avant et arrière sont parallèles ou sensiblement parallèles.

De préférence, le berceau comprenant au moins deux branches distinctes, ces branches comportent à leur extrémité distale un ou plusieurs éléments de fixation pour l'assemblage dudit bloc à la structure dudit véhicule auquel ledit bloc est destiné à être rattaché.

On entend par « extrémité distale », l'extrémité libre, ou bord latéral, de la branche lorsque le berceau n'est pas relié à la structure du véhicule.

A titre purement illustratif, ces éléments de fixation comprennent des oreilles pourvues d'orifices pour le passage de la tige d'organes de fixation tels que des boulons.
- le berceau comprenant au moins deux branches distinctes, ledit bloc propulseur comprend deux éléments d'ancrage, chacun de ces éléments d'ancrage étant relié à une branche différente dudit berceau.
- le berceau comprenant au moins deux branches distinctes, ledit bloc propulseur comprend deux éléments d'ancrage, chacun de ces éléments d'ancrage étant relié à une branche différente dudit berceau.

Pour orienter le moteur, en complément de la liaison de type cardan, deux servo-vérins hydrauliques sont mis en oeuvre pour fournir la puissance élevée nécessaire à l'orientation de la tuyère.

Le moteur est avantageusement orientable d'un angle de +/- 5° autour des directions y et z où l'axe x est placé le long de l'axe longitudinal du bloc propulseur.
- ledit au moins un élément d'ancrage est un servo-vérin bloqué.

Il peut s'agir d'un servo-vérin bloqué mécaniquement ou d'un ensemble comportant un servo-vérin et une bielle pour bloquer mécaniquement ledit servo-vérin.
- au moins certaines desdites branches comprennent un logement pour recevoir un bras porteur d'un engin de manutention dudit berceau.

De préférence, ledit logement est placé à l'extrémité distale de la branche correspondante.

Avantageusement, ledit logement ayant une forme tubulaire creuse, un orifice d'axe transverse à l'axe longitudinal dudit logement permet l'introduction d'une fixation pour assurer le blocage dudit bras support dans ledit logement.

L'invention concerne également un véhicule de lancement équipé d'un bloc propulseur tel que décrit précédemment.

Ce véhicule de lancement est avantageusement un avion spatial pourvu de deux turboréacteurs pour assurer son décollage/atterrissage à partir d'une piste d'aéroport et d'un moteur-fusée lui permettant d'atteindre seul une altitude d'au moins soixante (60) kilomètres, avant d'entamer une phase de déplacement balistique pour rejoindre une altitude d'au moins cent (100) kms.

Dans une version utilitaire, ce véhicule de lancement est pourvu d'au moins une zone de stockage apte à recevoir une charge utile telle qu'un petit satellite ainsi qu'éventuellement un système de mise en orbite de celui-ci comportant notamment un dispositif de propulsion. Cette zone de stockage est, de préférence, équipée d'au moins un bras articulé et rétractable permettant la manipulation de ce petit satellite en vue de sa récupération ou de sa mise en orbite.

Dans une version de transport de passagers, ce véhicule de lancement comprend une cabine comportant un ou plusieurs sièges. Cette cabine est également pourvue d'une pluralité de fenêtres assurant aux passagers une vision vers l'extérieur de l'avion spatial.

Des organes de préhension tels que des poignées, sont placés à proximité de ces fenêtres pour permettre aux passagers en apesanteur de se tenir.

Bien entendu, l'avion spatial peut comporter à la fois une cabine pour recevoir un ou plusieurs passagers et une zone de stockage d'une charge utile.

La présente invention vise encore un ensemble de manutention pour le montage/démontage du bloc propulseur tel que décrit précédemment ainsi que son transport.

Selon l'invention, cet ensemble comprend :
- deux rails longitudinaux comportant chacun une première portion de rail de guidage destinée à être assemblée intérieurement à la structure du véhicule et une deuxième portion de rail de guidage solidaire d'un châssis,
- ledit châssis étant mobile au moins en déplacement vertical de sorte que lesdites portions de rail de guidage d'un même rail longitudinal puissent être placées bout à bout pour former deux rails de guidage longitudinaux latéraux, et
- un chariot mobile en translation le long desdits rails longitudinaux, ledit chariot comportant deux paires de bras supports démontables, chacun desdits bras étant destiné à être assemblé audit berceau pour supporter ledit bloc après son démontage de la structure du véhicule auquel il est destiné à être rattaché.

Selon un mode de réalisation, ce chariot mobile, équipé de bielles, assure la reprise de la masse du moteur-fusée via son bâti-moteur ou berceau. Ce chariot mobile maintient le moteur qui, une fois déconnecté du véhicule, glisse sur les rails de guidage et rejoint un châssis de manutention lui même pourvu de rails. Ce châssis de manutention reçoit le moteur tenu par le chariot mobile.

Dans différents modes de réalisation particuliers de cet ensemble de manutention, chacun ayant ses avantages particuliers et susceptibles de nombreuses combinaisons techniques possibles:
- ledit chariot comprend deux pièces longitudinales de structure équipées d'organes de roulement aptes à assurer le déplacement dudit chariot le long desdits rails de guidage, lesdites pièces longitudinales étant espacées latéralement l'une de l'autre en étant reliées entre elles par une pièce de renfort mécanique empêchant tout écartement desdites pièces lorsque ledit chariot supporte ledit bloc propulseur, ledit chariot définissant ainsi une fourche apte à recevoir entre lesdites pièces le moteur du bloc propulseur lorsque ledit chariot est introduit dans ledit véhicule.

Cette pièce de renfort mécanique est avantageusement une bielle.
- ledit châssis est mobile en déplacement vertical pour assurer la mise en regard desdites portions de rail de guidage.

De préférence, ledit châssis est monté sur une structure articulée de façon à être déplacée entre une position basse de repos et une position haute de service, ladite structure articulée étant mobile.

A titre purement illustratif, cette structure articulée est une structure à ciseaux, cette dernière étant solidaire d'un châssis mobile tel qu'un châssis équipé de roues.
- ledit châssis a une section transversale en forme de U pour recevoir ledit chariot sans risque d'endommager ledit bloc propulseur.
- ledit berceau ayant la forme d'une croix ou encore d'un X, ledit chariot mobile comporte deux paires de bras supports démontables, chaque bras étant destiné à être assemblé à une branche distincte de ce berceau pour supporter ledit bloc après son démontage de la structure du véhicule auquel il est destiné à être rattaché.

Avantageusement, ledit ensemble comporte des pièces de fixation de l'extrémité desdits bras sur lesdites branches du berceau.

Par exemple, ces pièces de fixation sont des ferrures.

De préférence, au moins un bras d'une desdites paires comporte une bielle principale destinée à relier une branche dudit berceau audit chariot et une bielle secondaire, dite bielle transverse, reliant de biais ladite bielle principale audit chariot de manière à bloquer en rotation ledit berceau par rapport audit chariot.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 représente schématiquement un bloc propulseur selon un mode de réalisation particulier de la présente invention ;
- la figure 2 est une vue de dessous du bloc propulseur de la Fig. 1 ;
- la figure 3 est une vue en perspective du bloc propulseur de la Fig. 1 montrant les têtes de connexion des liaisons fluides et électriques placées dans un plan de démontage du berceau ;
- la figure 4 représente schématiquement un ensemble de manutention du bloc propulseur de la Fig. 1 selon un mode de réalisation particulier de l'invention ;
- la figure 5 montre une des étapes du démontage d'un bloc propulseur au moyen de l'ensemble de manutention de la Fig.4, dans laquelle le bloc propulseur étant toujours solidaire de la structure du véhicule de lancement, les bras du chariot mobile introduit dans l'avion spatial, sont assemblés au berceau du bloc propulseur, la partie arrière de l'avion spatial étant ici représentée en transparence par souci de clarté ;
- la figure 6 est une vue élargie de la Fig. 5 représentant la seule partie arrière de l'avion spatial par transparence pour montrer l'assemblage des rails de guidage à la structure environnante de l'avion spatial ainsi que l'assemblage des bras du chariot mobile au berceau du bloc propulseur en vue de le supporter après son démontage ;
- la figure 7 est une vue en perspective de la Fig. 6 montrant la partie arrière de l'avion spatial, le chariot mobile étant encore placé à l'intérieur de l'avion spatial et assemblé par l'intermédiaire de ses bras au bloc propulseur en vue de son retrait ;
- la figure 8 est une vue en perspective de la Fig. 6 dans laquelle le bloc propulseur a été partiellement extrait de la partie arrière l'avion spatial et reçu sur le châssis mobile en vue de sa manutention ;
- la figure 9 est une vue en perspective de la Fig. 6 montrant l'avion spatial dans son intégralité, le bloc propulseur étant entièrement retiré de la partie arrière de celui-ci et reçu sur le châssis mobile de l'ensemble de manutention, ce dernier étant encore relié à la partie arrière de l'avion spatial ;
- la figure 10 montre le bloc propulseur de la Fig. 1 reçu sur l'ensemble de manutention de la Fig. 4 ;

### DESCRIPTION DETAILLEE DE MODES DE REALISATION DE L'INVENTION

On notera tout d'abord que les figures ne sont pas à l'échelle.

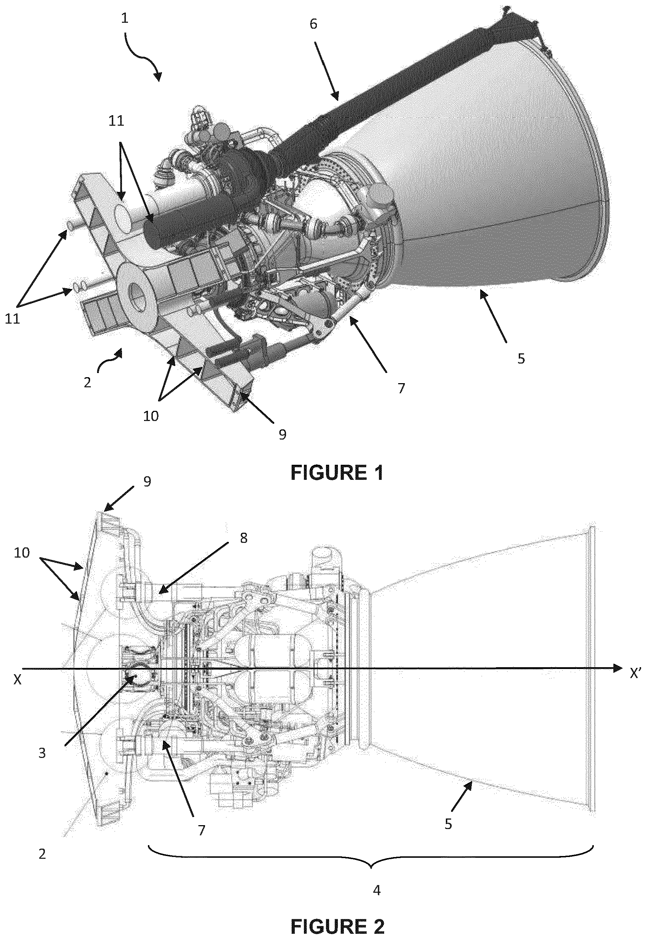

Les figures 1 à 3 montrent un bloc propulseur 1 pour un avion spatial réutilisable selon un mode de réalisation préféré de l'invention.

Ce bloc propulseur 1 comporte un berceau 2, ou bâti-moteur, sur lequel est montée, par l'intermédiaire d'une liaison de type cardan 3, un moteur-fusée 4. Le berceau 2 est de préférence réalisé en matériau métallique ou composite. A titre illustratif, il est ici réalisé en alliage d'aluminium.

Ce moteur-fusée 4 comporte un propulseur, ou moteur, alimenté en ergols pour générer les gaz de combustion qui après accélération dans une tuyère 5 sont éjectés pour fournir la poussée nécessaire à l'avion spatial. Cette poussée est transmise à la structure de l'avion spatial par le biais du berceau 2.

De manière avantageuse, ce propulseur est alimenté en carburant tel que du méthane liquide, et en comburant tel que de l'oxygène liquide, par le biais d'une pluralité d'injecteurs assurant la pulvérisation et le mélange de ces ergols dans le propulseur.

Ces injecteurs sont reliés à des circuits de pompage permettant d'alimenter le propulseur en comburant et carburant. Une tuyère auxiliaire 6 placée latéralement à la tuyère 5, assure l'échappement des gaz générés lors du pompage du carburant et du comburant. Cette tuyère auxiliaire 6 fournit un complément de poussée à l'avion spatial.

La tuyère 5 est constituée par une pièce monobloc refroidie pour supporter les températures élevées des gaz de combustion éjectés. La tuyère 5 définit un axe longitudinal de symétrie X-X'.

Le berceau 2 a ici la forme d'une croix ce qui définit un plan d'interface. La rotation cette tuyère 5 autour de l'axe X-X' est bloquée par deux servo-vérins 7, 8 bloqués mécaniquement. Chaque servo-vérin 7, 8 est relié d'une part à la tuyère 5 et d'autre part à une branche du berceau 2, lesdites branches étant distinctes et contigües.

L'ensemble formé par le berceau 2, le moteur et les servo-vérins 7, 8 constitue ainsi un ensemble fixe dont le démontage est réalisé au niveau des fixations de cet ensemble sur la structure de l'avion spatial.

Les extrémités libres des branches du berceau 2 comprennent ici des oreilles 9 présentant des orifices au travers desquels peuvent traverser les tiges d'organes de fixation tels que des boulons.

Par ailleurs, en vue d'alléger le poids du berceau 2 tout en conservant une résistance mécanique élevée, chaque branche de la croix est creuse mais comporte des nervures 10 de renfort.

Le bloc propulseur 1 comprenant des lignes de circulation en fluide et des lignes d'alimentation électrique comportant chacune à leur extrémité libre une liaison démontable, ou tête 11 de connexion, destinée à être assemblée, ou connectée, à un circuit correspondant de l'avion spatial auquel ce bloc propulseur 1 est destiné à être rattaché, aucune de ces têtes de connexion 11 du bloc propulseur 1 ne dépasse, ou encore n'est placée en saillie, d'un plan de démontage 12 passant par les branches du berceau 2. Ce plan de démontage 12 du bloc propulseur est donc le plan d'interface du bloc propulseur avec le véhicule sur lequel ce bloc est destiné à être monté.

Avantageusement, les têtes 11 de connexion des lignes de circulation en fluide et des lignes d'alimentation électrique sont placées aux extrémités libres des branches du berceau 2 dans le plan de démontage 12.

Avantageusement, les lignes principales d'alimentation en ergols du moteur sont positionnées entre deux branches contiguës du berceau 2 afin de permettre un accès aisé par un opérateur à l'intérieur de l'avion spatial.

La présente invention concerne encore un ensemble de manutention pour le montage/démontage du bloc propulseur 1 décrit ci-dessus.

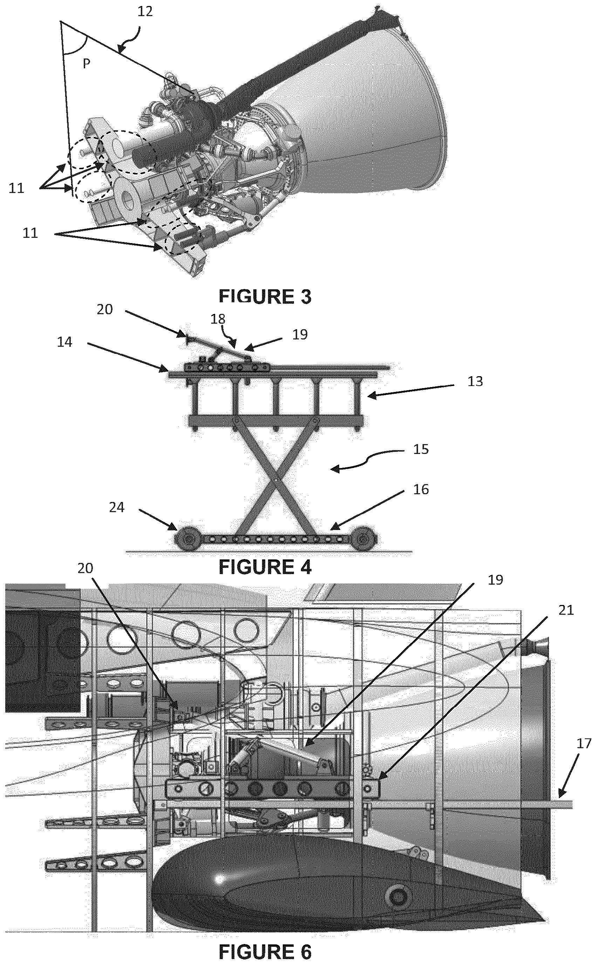

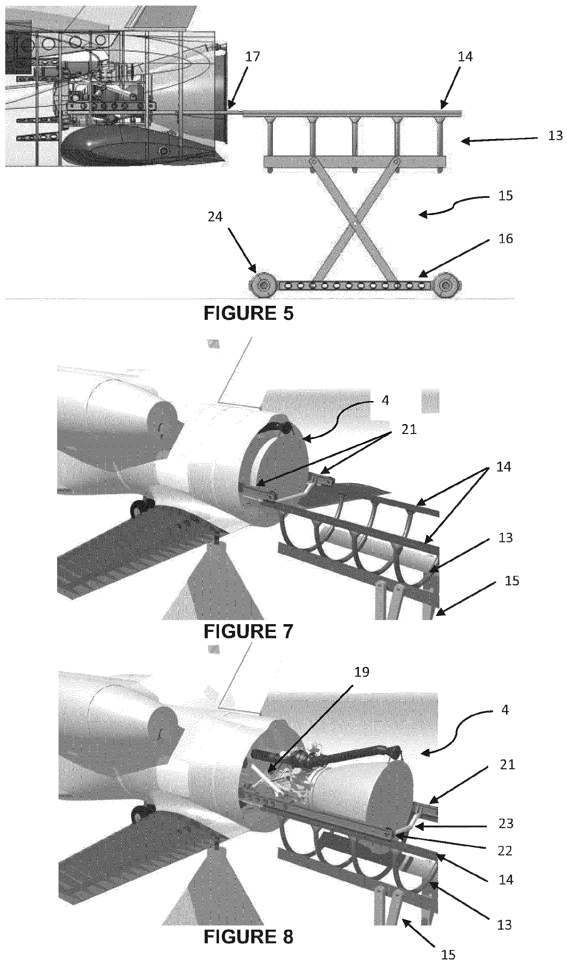

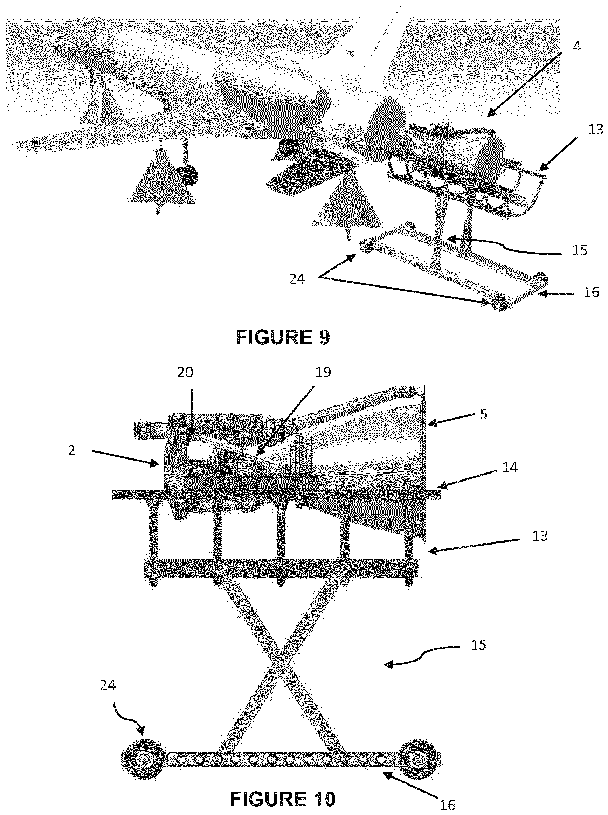

Les figures 4 à 10 montrent un ensemble de manutention du bloc propulseur tel que décrit ci-dessus selon un mode de réalisation particulier de l'invention.

Cet ensemble de manutention comporte un châssis 13 présentant une section transversale en forme de U de manière à définir un logement de réception d'un bloc propulseur. Ce châssis 13 comporte également à son extrémité supérieure une première paire 14 de rails de guidage latéraux et est monté sur une structure articulée 15 du type à ciseaux de façon à pouvoir être déplacée entre une position basse de repos et une position haute de service.

Cette structure articulée 15 est solidaire d'une plateforme 16 équipée de roues 24 pour assurer le déplacement de ce châssis 13.

Cet ensemble de manutention comporte encore une deuxième paire 17 de rails de guidage destinés à être assemblés directement sur la structure environnante de l'avion spatial de part et d'autre du bloc propulseur dont la manutention doit être assurée.

Une fois montés sur la structure intérieure de l'avion spatial, ces rails de guidage 17 sont parallèles ou sensiblement parallèles de manière à définir un chemin de roulement pour un chariot 18 mobile apte à se déplacer le long de ces rails.

Les rails de guidage de cette deuxième paire 17 présentent de plus une dimension longitudinale leurs assurant, une fois montés sur la structure interne de l'avion spatial, un dépassement de la partie arrière de cet avion de sorte que les rails de guidage de la première paire 14 supportée par le châssis 13 mobile peuvent être amenés en vis-à-vis des rails de guidage de la deuxième paire 17 pour former un chemin de roulement continu entre l'intérieur de la partie arrière de l'avion spatial et le châssis 13 mobile placé à l'extérieur de l'avion, par exemple sur une piste d'un aéroport.

Ainsi une fois démonté, le bloc propulseur peut être transféré de la partie arrière de l'avion spatial sur le châssis 13 de manière à être supporté uniquement par ce dernier via le chariot 18 mobile, en étant reçu dans le logement prévu à cet effet.

Avantageusement, le profil en U ainsi que les dimensions de ce logement permettent d'éviter une éventuelle détérioration du bloc propulseur par contact lorsque ce bloc propulseur est ainsi reçu sur le châssis.

Pour assurer le support du bloc propulseur lors de son démontage, le chariot 18 comporte deux paires de bras supports 19, chacune de ces paires de bras étant placée sur un bord latéral du chariot 18 de sorte que chaque bras support 19 d'une même paire est assemblé à une branche distincte, supérieure ou inférieure, du berceau 2.

Ainsi le chariot 18 mobile en translation le long du chemin de roulement crée par les rails de guidage des première 14 et deuxième 17 paires de rails mis bout-à-bout, est relié à chacune des branches du berceau 2 par l'intermédiaire de ses bras supports 19.

Pour faciliter la mise en place du chariot 18, chaque bras support 19 est démontable de sorte qu'il peut être assemblé indépendamment du chariot 18, à la branche correspondante du berceau 2 par un opérateur qui s'est introduit dans la partie arrière de l'avion spatial. Pour cela, une pièce de fixation rapportée 20 est préalablement assemblée à la branche correspondante en vue de recevoir et retenir l'extrémité du bras support correspondant 19.

Par ailleurs, ce chariot 18 comprend deux pièces 21 longitudinales de structure équipées d'organes de roulement 22 aptes à assurer le déplacement de ce chariot 18 le long des rails de guidage 14, 17, ces pièces 21 longitudinales étant espacées latéralement l'une de l'autre en étant reliées entre elles par une pièce de renfort 23 mécanique qui est ici une bielle, de manière à empêcher tout écartement de ces pièces 21 longitudinales lorsque ledit chariot 18 supporte le bloc propulseur, ce chariot 18 définissant ainsi une fourche apte à recevoir entre lesdites pièces 21 longitudinales le moteur-fusée 4 du bloc propulseur 1 lorsque ledit chariot 18 est introduit dans ledit véhicule. L'autre extrémité des bras supports 19 est rendue solidaire de ces pièces 21 longitudinales du chariot 18.

La présente invention permet donc, avantageusement, de minimiser les durées de démontage, échange et remontage du ou des moteurs-fusées d'un véhicule de lancement pendant la maintenance.

## Revendications

1. Bloc propulseur pour véhicule de lancement réutilisable comprenant un moteur-fusée (4) supporté par un berceau (2), dans lequel
- ledit berceau (2) comporte au moins trois éléments de fixation (9) pour l'assemblage dudit bloc sur la structure dudit véhicule auquel ledit bloc est destiné à être rattaché,
- lesdits au moins trois éléments de fixation définissant un plan de démontage (12) dudit bloc, et
- ledit bloc comprenant une ou plusieurs liaisons en fluide et/ou électriques dudit moteur (4), chacune desdites liaisons comporte une extrémité libre (11) destinée à être assemblée à un circuit d'alimentation correspondant du véhicule auquel ledit bloc est destiné à être rattaché,
**caractérisé en ce que** le bout d'au moins certaines desdites extrémités libres (11) est contenu dans ledit plan de démontage (12).

2. Bloc selon la revendication 1, **caractérisé en ce que** le bout de l'extrémité libre (11) de chacune desdites liaisons est contenu dans ledit plan de démontage (12).

3. Bloc selon la revendication 1 ou 2, **caractérisé en ce que** ledit bloc propulseur comprend au moins un élément d'ancrage (7, 8) pour bloquer en rotation le moteur (4) par rapport audit berceau (2), ledit au moins un élément d'ancrage (7, 8) étant relié d'une part audit moteur et d'autre part à un point d'accrochage correspondant sur ledit berceau (2)

4. Bloc selon l'une quelconque des revendications 1 à 3, **caractérisé en ce que** ledit berceau (2) est allongé en présentant dans sa dimension transversale une face avant et une face arrière, ladite face avant étant destinée à être assemblée audit moteur (4), ladite face avant définissant un plan avant dudit berceau (2) contenant au moins une partie de ladite face avant, ladite au moins une partie présentant des dimensions permettant la fixation des éléments d'ancrage (7, 8) dudit moteur (4).

5. Bloc selon la revendication 4, **caractérisé en ce que** ledit berceau (2) présente une forme choisie dans le groupe comprenant une forme de disque, une forme de croix, une forme en A, une forme en H, une forme en Y, une forme en T.

6. Bloc selon la revendication 4 ou 5, **caractérisé en ce que** ladite face arrière définissant un plan arrière dudit berceau (2), lesdits plans avant et arrière sont parallèles ou sensiblement parallèles.

7. Bloc selon la revendication 3 et 5, **caractérisé en ce que** ledit berceau comprenant au moins deux branches distinctes et au moins deux éléments d'ancrage (7, 8), chacun desdits éléments d'ancrage (7, 8) est relié à une branche différente dudit berceau (2).

8. Véhicule de lancement équipé d'un bloc propulseur selon l'une quelconque des revendications 1 à 7.

9. Ensemble de manutention pour le montage/démontage du bloc propulseur selon l'une quelconque des revendications 1 à 7 et son transport, **caractérisé en ce qu'**il comprend
- deux rails longitudinaux (14, 17) comportant chacun une première portion (14) de rails de guidage destinée à être assemblée intérieurement à la structure du véhicule de lancement et une deuxième portion (17) de rails de guidage solidaire d'un châssis (13),
- ledit châssis (13) étant mobile au moins en déplacement vertical de sorte que lesdites portions (14, 17) de rails de guidage d'un même rail longitudinal puissent être placées bout à bout pour définir deux rails de guidage longitudinaux latéraux, et
- un chariot (18) mobile en translation le long desdits rails de guidage longitudinaux, ledit chariot (18) comportant deux paires de bras supports (19) démontables, chacun desdits bras (19) étant destiné à être assemblé à une branche distincte dudit berceau (2) pour supporter ledit bloc après son démontage de la structure du véhicule auquel il est destiné à être rattaché.

10. Ensemble selon la revendication 9, **caractérisé en ce que** ledit chariot (18) comprend deux pièces (21) longitudinales de structure équipées d'organes de roulement (22) aptes à assurer le déplacement dudit chariot (18) le long desdits rails de guidage (14, 17), lesdites pièces (21) longitudinales étant espacées latéralement l'une de l'autre en étant reliées entre elles par une pièce (23) de renfort mécanique empêchant tout écartement desdites pièces (21) lorsque ledit chariot (18) supporte ledit bloc propulseur, ledit chariot (18) définissant ainsi une fourche apte à recevoir entre lesdites pièces(21) longitudinales le moteur (4) du bloc propulseur lorsque ledit chariot (18) est introduit dans ledit véhicule.

11. Ensemble selon la revendication 9 ou 10, **caractérisé en ce que** ledit châssis (13) est mobile en déplacement vertical pour assurer la mise en regard desdites portions de rail de guidage (14, 17).

12. Ensemble selon la revendication 11, **caractérisé en ce que** ledit châssis (13) est monté sur une structure articulée (15) de façon à être déplacée entre une position basse de repos et une position haute de service, ladite structure articulée (15) étant mobile.

13. Ensemble selon l'une quelconque des revendications 9 à 12, **caractérisé en ce que** ledit châssis (13) a une section transversale en forme de U pour recevoir ledit chariot (18) sans risque d'endommager ledit bloc propulseur.

14. Ensemble selon l'une quelconque des revendications 9 à 13, **caractérisé en ce que** ledit berceau ayant la forme d'une croix ou encore d'un X, ledit chariot mobile comporte deux paires de bras supports démontables, chaque bras étant destiné à être assemblé à une branche distincte de ce berceau pour supporter ledit bloc après son démontage de la structure du véhicule auquel il est destiné à être rattaché.

15. Ensemble selon la revendication 14, **caractérisé en ce qu'**il comporte des pièces de fixation (20) de l'extrémité desdits bras supports (19) sur lesdites branches du berceau (2).

16. Ensemble selon la revendication 14 ou 15, **caractérisé en ce qu'**au moins un bras support (19) d'une desdites paires comporte une bielle principale destinée à relier une branche dudit berceau (2) audit chariot (18) et une bielle secondaire, dite bielle transverse, reliant de biais ladite bielle principale audit chariot de manière à bloquer en rotation ledit berceau (2) par rapport audit chariot.

## Patentansprüche

1. Antriebseinheit für eine wiederverwendbare Trägerrakete, umfassend einen Raketenmotor (4) der von einer Aufhängung (2) getragen ist, wobei
- die Aufhängung (2) mindestens drei Befestigungselemente (9) zur Montage der Einheit auf der Struktur der Trägerrakete aufweist, mit der die Einheit verbunden werden soll,
- die mindestens drei Befestigungselemente eine Demontageebene (12) der Einheit definieren und
- die Einheit eine oder mehrere Fluid- und/oder Elektroverbindungen des Motors (4) aufweisen, jede der Verbindungen ein freies Ende (11) aufweist, das dazu bestimmt ist, an eine entsprechende Versorgungsschaltung der Trägerrakete montiert zu werden, mit der die Einheit verbunden werden soll,
**dadurch gekennzeichnet, dass** die Spitze von mindestens bestimmten freien Enden (11) in der Demontageebene (12) enthalten ist.

2. Einheit nach Anspruch 1, **dadurch gekennzeichnet, dass** die Spitze des freien Endes (11) von jeder der Verbindungen in der Demontageebene (12) enthalten ist.

3. Einheit nach Anspruch 1 oder 2, **dadurch gekennzeichnet, dass** die Antriebseinheit mindestens ein Verankerungselement (7, 8) aufweist, um den Motor (4) in Bezug auf die Aufhängung (2) in Drehung zu blockieren, wobei das mindestens eine Verankerungselement (7, 8) einerseits mit dem Motor und andererseits mit einem entsprechenden Einhängepunkt auf der Aufhängung (2) verbunden ist.

4. Einheit nach einem der Ansprüche 1 bis 3 **dadurch gekennzeichnet, dass** die Aufhängung (2) länglich ist und dabei in ihrer Quererstreckung eine Vorderfläche und eine Rückfläche aufweist, wobei die Vorderfläche dazu bestimmt ist, an den Motor (4) montiert zu werden, wobei die Vorderfläche eine vordere Ebene der Aufhängung (2) definiert, die mindestens einen Teil der Vorderfläche enthält, wobei der mindestens eine Teil Abmessungen aufweist, die das Befestigen der Verankerungselemente (7, 8) des Motors (4) ermöglichen.

5. Einheit nach Anspruch 4, **dadurch gekennzeichnet, dass** die Aufhängung (2) eine Form aufweist, die ausgewählt ist aus der Gruppe, die eine Scheibenform, eine Kreuzform, eine A-Form, eine H-Form, eine Y-Form, eine T-Form aufweist.

6. Einheit nach Anspruch 4 oder 5, **dadurch gekennzeichnet, dass** die Rückfläche eine hintere Ebene der Aufhängung (2) aufweist, wobei die vordere und die hintere Ebene parallel oder im Wesentlichen parallel sind.

7. Einheit nach Anspruch 3 und 5, **dadurch gekennzeichnet, dass** die Aufhängung mindestens zwei verschiedene Zweige und mindestens zwei Verankerungselemente (7, 8) aufweist, wobei jedes der Verankerungselemente (7, 8) mit einem anderen Zweig der Aufhängung (2) verbunden ist.

8. Trägerrakete, die mit einer Antriebseinheit nach einem der Ansprüche 1 bis 7 ausgestattet ist.

9. Handhabungsanordnung für die Montage/Demontage der Antriebseinheit nach einem der Ansprüche 1 bis 7 und ihren Transport, **dadurch gekennzeichnet, dass** sie Folgendes aufweist
- zwei Längsschienen (14, 17), die jeweils einen ersten Führungsschienenabschnitt (14), der dazu bestimmt ist, innen an die Struktur der Trägerrakete montiert zu werden, und einen zweiten Führungsschienenabschnitt (17) aufweisen, der mit einem Tragwerk (13) fest verbunden ist,
- wobei das Tragwerk (13) mindestens in vertikaler Verschiebung derart beweglich ist, dass die Führungsschienenabschnitte (14, 17) einer gleichen Längsschiene aneinander anstoßend angeordnet werden können, um zwei seitliche längsverlaufende Führungsschienen zu definieren, und
- einen Schlitten (18), der entlang der längsverlaufenden Führungsschienen längs verschiebbar ist, wobei der Schlitten (18) zwei Paare von abnehmbaren Tragarmen (19) aufweist, wobei jeder der Arme (19) dazu bestimmt ist, an einen verschiedenen Zweig der Aufhängung (2) montiert zu werden, um die Einheit nach ihrem Demontieren von der Struktur der Trägerrakete zu tragen, mit der sie verbunden werden soll.

10. Anordnung nach Anspruch 9, **dadurch gekennzeichnet, dass** der Schlitten (18) zwei längsverlaufende Strukturteile (21) aufweist, die mit Rollorganen (22) ausgestattet sind, die geeignet sind, die Verschiebung des Schlittens (18) entlang den Führungsschienen (14, 17) zu gewährleisten, wobei die längsverlaufenden Strukturteile (21) seitlich voneinander beabstandet sind und dabei untereinander durch ein mechanisches Verstärkungsteil (23) verbunden sind, das jegliches Spiel der Teile (21) verhindert, wenn der Schlitten (18) die Antriebseinheit trägt, wobei der Schlitten (18) auf diese Weise eine Gabel bildet, die geeignet ist, zwischen den längsverlaufenden Teilen (21) den Motor (4) der Antriebseinheit aufzunehmen, wenn der Schlitten (18) in die Trägerrakete eingeführt wird.

11. Anordnung nach Anspruch 9 oder 10, **dadurch gekennzeichnet, dass** das Tragwerk (13) in vertikaler Verschiebung beweglich ist, um das Gegenüberstellen der Führungsschienenabschnitte (14, 17) zu gewährleisten.

12. Anordnung nach Anspruch 11, **dadurch gekennzeichnet, dass** das Tragwerk (13) auf einer Gelenkstruktur (15) derart befestigt ist, dass es zwischen einer unteren Ruheposition und einer oberen Arbeitsposition bewegt wird, wobei die Gelenkstruktur (15) beweglich ist.

13. Anordnung nach einem der Ansprüche 9 bis 12, **dadurch gekennzeichnet, dass** das Tragwerk (13) einen U-förmigen Querschnitt aufweist, um den Schlitten (18) aufzunehmen, ohne Gefahr zu laufen, die Antriebseinheit zu beschädigen.

14. Anordnung nach einem der Ansprüche 9 bis 13 **dadurch gekennzeichnet, dass** die Aufhängung die Form eines Kreuzes oder auch eines X aufweist, wobei der bewegliche Schlitten zwei Paare von abnehmbaren Tragarmen aufweist, wobei jeder Arm dazu bestimmt ist, an einen verschiedenen Zweig dieser Aufhängung montiert zu werden, um die Einheit nach ihrem Demontieren von der Struktur der Trägerrakete zu tragen, mit der sie verbunden werden soll.

15. Anordnung nach Anspruch 14, **dadurch gekennzeichnet, dass** sie Teile zum Befestigungen (20) des Endes der Tragarme (19) auf den Zweigen der Aufhängung (2) aufweist.

16. Einheit nach Anspruch 14 oder 15, **dadurch gekennzeichnet, dass** mindestens ein Tragarm (19) von einem der Paare eine Hauptpleuelstange, die dazu bestimmt ist, einen Zweig der Aufhängung (2) mit dem Schlitten (18) zu verbinden, und sekundäre Pleuelstange aufweist, die transversale Pleuelstange genannt wird, die die Hauptpleuelstange schräg mit dem Schlitten derart verbindet, um die Aufhängung (2) gegenüber dem Schlitten in Drehung zu blockieren.

## Claims

1. Thrust unit for a reusable launch vehicle comprising a rocket engine (4) supported by a cradle (2), in which
- said cradle (2) comprises at least three fixing members (9) for the assembly of said unit on the structure of said vehicle to which said unit is to be attached,
- said at least three fixing members defining a plane for dismantling (12) said unit and
- said unit comprising one or several fluid and/or electrical links of said engine (4), each of said links comprises a free end (11) to be assembled with a corresponding circuit for supplying the vehicle, to which said unit is to be connected,
**characterized in that** the tip of at least some of said free ends (11) is contained in said dismantling plane (12) .

2. Unit according to Claim 1, **characterized in that** the tip of the free end (11) of each of said links is contained in said dismantling plane (12).

3. Unit according to Claim 1 or 2, **characterized in that** said thrust unit comprises at least one anchoring member (7, 8) for blocking the rotation of the engine (4) in respect of said cradle (2), said at least one anchoring member (7, 8) being connected firstly to said engine and secondly to a corresponding anchoring point on said cradle (2).

4. Unit according to any one of Claims 1 to 3, **characterized in that** said cradle (2) is extended, exhibiting in its transverse dimension a front face and a rear face, said front face being intended for assembly with said engine (4), said front face defining a front plane of said cradle (2) containing at least one section of said front face, said at least one section exhibiting dimensions allowing the fixing of anchoring members (7, 8) of said engine (4).

5. Unit according to Claim 4, **characterized in that** said cradle (2) exhibits a shape chosen from the group comprising a disc shape, a cross shape, an A shape, an H shape, a Y shape, a T shape.

6. Unit according to Claim 4 or 5, **characterized in that** said rear face defines a rear plane of said cradle (2), so that said front and rear planes are parallel or substantially parallel.

7. Unit according to Claim 3 and 5, **characterized in that** said cradle comprising at least two different limbs and at least two anchoring members (7, 8), each of said anchoring members (7, 8) is connected to a different limb of said cradle (2).

8. Launch vehicle equipped with a thrust unit according to any one of Claims 1 to 7.

9. Handling assembly for the assembly/dismantling of the thrust unit according to any one of Claims 1 to 7 and the transportation thereof, **characterized in that** it comprises
- two longitudinal rails (14, 17), each comprising a first portion (14) of guide rails to be assembled on the inside to the structure of the launch vehicle and a second guide rail portion (17) integral with a chassis (13),
- said chassis (13) being mobile, at least in terms of vertical displacement, such that said guide rail portions (14, 17) of the same longitudinal rail can be placed end to end to form two side longitudinal guide rails, and
- a carriage (18) movable in a straight line along said longitudinal rails, said carriage (18) comprising two pairs of detachable support arms, each of said arms (19) being for assembly to a different limb of said cradle (2) to support said unit after it has been dismantled from the vehicle structure to which it is to be attached.

10. Assembly according to Claim 9, **characterized in that** said carriage (18) comprises two longitudinal structural parts (21) equipped with running gear (22) suitable for ensuring the movement of said carriage (18) along said guide rails (14, 17), said longitudinal parts (21) being spaced laterally relative to one another, being connected to one another by a mechanical reinforcement part (23), preventing any gap between said parts (21) when said carriage (18) supports said thrust unit, said carriage (18) thereby defining a fork capable of receiving between said longitudinal parts (21) the engine (4) of the thrust unit when said carriage (18) is introduced into said vehicle.

11. Assembly according to Claim 9 or 10, **characterized in that** said chassis (13) is mobile in terms of vertical displacement to ensure that said guide rail portions (14, 17) face one another.

12. Assembly according to Claim 11, **characterized in that** said chassis (13) is mounted on an articulated structure (15) in such a manner as to be displaced between a low rest position and a high service position, said articulated structure (15) being mobile.

13. Assembly according to any one of Claims 9 to 12, **characterized in that** said chassis (13) has a transverse cross section in the shape of a U, to receive said carriage (18) without any risk of damaging said thrust unit.

14. Assembly according to any one of Claims 9 to 13, **characterized in that** said cradle being in the shape of a cross or also an X, said mobile carriage comprises two pairs of detachable support arms, each arm being for assembly on a different limb of this cradle, to support said unit after it has been dismantled from the structure of the vehicle to which it is to be attached.

15. Assembly according to Claim 14, **characterized in that** it comprises fixing parts (20) for the end of said support arms (19) on said limbs of the cradle (2).

16. Assembly according to Claim 14 or 15, **characterized in that** at least one support arm (19) of one of said pairs comprises a main connecting rod for connecting a limb of said cradle (2) to said carriage (18) and a secondary connecting rod, referred to as the transverse connecting rod, connecting said main connecting rod to said carriage in a slanting manner, in such a way as to block the rotation of said cradle (2) in respect of said carriage.
